# FASCICULE DE BREVET EUROPEEN

(11) **EP 2 436 576 B1**
(45) Date de publication et mention de la délivrance du brevet: **05.06.2013**
(21) Numéro de dépôt: 11180898.6
(22) Date de dépôt: 12.09.2011
(51) Int. Cl.: B62D 3/12, B62D 5/22

(54) **Carter de direction de véhicule automobile à structure renforcée**
Lenkgehäuse eines Kraftfahrzeugs mit verstärkter Struktur
Automobile steering gearbox with reinforced structure

(30) Priorité: 30.09.2010 FR 1057915
(43) Date de publication de la demande: 04.04.2012
(73) Titulaire: Jtekt Europe, 69540 Irigny (FR)
(72) Inventeur: Rey, Laurent, 69100 VILLEURBANNE (FR)
(74) Mandataire: Chevalier, Renaud Philippe

(56) Documents cités:
- EP-A2- 1 022 209
- DE-A1-102008 002 359
- JP-A- 10 236 327

## Description

La présente invention concerne, de façon générale, les systèmes de direction de véhicules automobiles. Elle se rapporte plus particulièrement à un carter de direction, aussi appelé carter de crémaillère, qui est une pièce creuse de support et de protection, dans laquelle sont montés et guidés entre autres une crémaillère et un pignon qui engrène avec la crémaillère, et sur laquelle peuvent aussi être montées des pièces annexes de guidage et d'étanchéité qui coopèrent avec la crémaillère et le pignon. Compte tenu de la forme très allongée de la crémaillère, le carter de direction possède lui-même une forme allongée et creuse, donc une forme globalement tubulaire.

Dans le cas d'un système de direction à assistance électrique, le carter de direction est, le plus souvent, assemblé à un autre carter qui renferme un réducteur à engrenages, par exemple à vis sans fin et roue tangente, auquel est accouplé l'arbre de sortie du moteur électrique d'assistance. Dans le cas d'un système de direction à assistance hydraulique, le carter de direction possède des formes internes notamment cylindriques qui constituent, avec la crémaillère, l'équivalent d'un vérin hydraulique destiné à assister le conducteur du véhicule en amplifiant l'effort exercé par ce dernier sur le volant.

Dans tous les cas, le carter de direction réalise aussi une liaison entre le système de direction, considéré dans son ensemble, et la caisse du véhicule automobile concerné, plus particulièrement son berceau. Le carter de direction doit donc posséder une bonne rigidité, lui permettant d'absorber et de transmettre des efforts mécaniques.

Ainsi, tout carter de direction doit être fabriqué de manière à, d'une part, posséder une bonne résistance mécanique et, d'autre part, posséder une géométrie très précise pour le positionnement et le guidage de divers organes. Plusieurs modes d'obtention d'un carter de direction sont connus.

De la manière la plus habituelle, un carter de direction est réalisé par moulage, en alliage d'aluminium, la pièce obtenue de moulage étant ensuite usinée de manière très précise dans ses zones fonctionnelles, destinées à coopérer avec d'autres éléments du système de direction.

Ce mode de réalisation traditionnel présente l'inconvénient d'être complexe et coûteux, puisqu'il nécessite de nombreuses étapes de fabrication. En outre, l'obtention de la forme cylindrique interne du carter est particulièrement pénalisante puisqu'elle nécessite, lors du moulage, l'intervention et le mouvement en sens opposés de deux noyaux de moulage particulièrement longs. Ces deux noyaux comportent nécessairement une dépouille, de sorte que l'espace cylindrique interne obtenu est de section ou de diamètre plus petit à mi-longueur du carter, et plus grand vers les deux extrémités de ce carter. Le guidage correct de la crémaillère nécessite donc, vers les extrémités du carter, la pose de deux limiteurs de course prévus pour contenir le mouvement radial de la crémaillère. Enfin, le contact entre d'une part les rotules d'articulation des biellettes de direction, aux extrémités de la crémaillère, et d'autre part le carter de direction ici métallique, est trop bruyant de sorte qu'un limiteur ou une butée en matière plastique doit être encore fixé à chaque extrémité du carter de direction.

Par le document de brevet EP 1022209A2, qui sert de base au préambule de la revendication 1, on connaît déjà un carter de direction qui comporte un corps à base de matière plastique, renforcé intérieurement par un tube de renfort qui s'étend sur sensiblement toute la longueur dudit corps. Le tube de renfort est ici un tube métallique, relativement lourd et de forme complexe difficile à obtenir, le tube comportant des nervures longitudinales. Il est aussi à noter que ce document s'applique à une direction à assistance hydraulique, pour laquelle l'utilisation d'un tube métallique présente l'intérêt de fournir facilement un tube aux dimensions précises et intérieurement lisse, pour implanter le dispositif d'assistance conformé en vérin hydraulique. De telles exigences n'existent plus dans le cas de directions à assistance électrique, actuellement de plus en plus répandues.

Par ailleurs, on connaît des pièces en matières plastiques renforcées avec des fibres suffisamment résistantes pour remplacer les pièces métalliques notamment en alliages d'aluminium, utilisées dans le domaine automobile notamment pour des applications prenant place sous le capot moteur : bac à huile, crépine, boîtier de papillon, etc. De telles matières plastiques présentent, en elles-mêmes, l'inconvénient d'être moins rigides que l'aluminium et ses alliages, de sorte qu'il est nécessaire de renforcer considérablement les pièces ainsi fabriquées, pour obtenir une rigidité équivalente à celle de l'aluminium.

Pour des carters de direction, l'espace disponible restreint et les exigences de rigidité propres aux fonctions de ces carters limitent encore à l'heure actuelle la réalisation dans ces matières plastiques renforcées.

La présente invention vise à remédier à tous les inconvénients ou limitations précédemment exposés, et elle a donc pour but de fournir un carter de direction dont la fabrication est facilitée, et qui possède une grande rigidité, ce carter étant notamment applicable à une direction à assistance électrique.

A cet effet, la présente invention a premièrement pour objet un carter de direction de véhicule automobile à structure renforcée, le carter de direction étant prévu pour loger et guider une crémaillère, et possédant une forme allongée et creuse, ce carter de direction comportant un corps à base de matière plastique, renforcé intérieurement par un tube de renfort rigide, s'étendant sur sensiblement toute la longueur du corps en matière plastique, le tube de renfort étant réalisé dans un matériau composite.

En tant que matériau composite, on utilise ici avantageusement une matrice en matière thermoplastique, telle que du polyamide ou du polypropylène, ou encore en matière thermodurcissable, ladite matrice étant renforcée par une matière fibreuse incorporée, par exemple de la fibre de verre ou de la fibre de carbone ou de la fibre d'aramide, ou un mélange de ces fibres.

Les fibres de renfort de la matrice peuvent être soit continues et unidirectionnelles, soit bidirectionnelles ou multidirectionnelles et tissées entre elles, soit encore discontinues et dispersées avec une orientation aléatoire dans ladite matrice.

Le tube de renfort étant en matériau composite, la matrice doit être choisie de telle sorte qu'elle soit compatible avec la matière plastique constitutive du corps du carter de direction, de manière à obtenir une bonne cohésion entre le corps de ce carter et le tube de renfort. En particulier, pour satisfaire une telle exigence, on peut utiliser un tube de renfort en un matériau composite comportant une matrice en polyamide 66, renforcée avec un tissu de fibre de verre.

De plus, pour optimiser la cohésion entre le corps du carter et le tube de renfort, la surface extérieure de ce tube de renfort est avantageusement une surface texturée.

Le corps du carter, à base de matière plastique, celui-ci peut être constitué lui aussi d'une matière plastique dans laquelle sont incorporées des fibres de renfort, par exemple une matrice en polyamide 66 renforcée par de la fibre de verre de longueur compatible avec le procédé d'injection de cette matière plastique. Le choix de la matière du corps du carter est fait de manière à faciliter la fabrication du carter, notamment en permettant l'injection de cette matière grâce à des fibres de longueur adaptée, typiquement comprise entre 0,15 mm et 5 mm, dans un procédé de fabrication par surmoulage comme précisé plus bas.

L'avantage de l'utilisation d'un tube de renfort en matériau composite est de rendre le carter de direction plus rigide, sans trop augmenter son épaisseur et son poids, mais aussi de faciliter la fabrication de ce carter, à plusieurs points de vue, de sorte qu'un tel tube remplace avantageusement un tube de renfort métallique, en particulier pour une direction qui n'est pas à assistance hydraulique.

En utilisant un tube de renfort suffisamment rigide, il est possible de réduire la longueur des noyaux mobiles dans le moule de surmoulage, ces noyaux s'engageant dans le tube à ses extrémités sur une longueur réduite qui dépend de sa rigidité. Lors du surmoulage, une forte pression (pouvant atteindre 500 à 800 bars) s'exerce sur le tube mais, en raison de la rigidité de ce tube, celui-ci n'est pas écrasé.

Avantageusement, des conformations appropriées du tube de renfort permettent aussi de lui conférer des fonctions complémentaires, intervenant non seulement dans la fabrication du carter de direction mais encore dans le montage d'éléments annexes et même dans le fonctionnement du système de direction.

Ces conformations, réalisables notamment aux deux extrémités du tube de renfort, peuvent être obtenues par formage à chaud du tube de renfort en matériau composite.

En particulier, le tube de renfort peut comporter, à l'une au moins de ses extrémités, une conformation resserrée notamment avec réduction de son diamètre, pour un positionnement et guidage direct de la crémaillère. Le tube de renfort peut aussi comporter, à l'une au moins de ses extrémités, une conformation élargie notamment avec augmentation de son diamètre, pour la mise en place d'une bague de positionnement et de guidage de la crémaillère.

Dans le cas d'une conformation resserrée d'une extrémité du tube de renfort, ce tube réalisé en matériau composite assure un guidage direct de la crémaillère. Le corps du carter, obtenu par surmoulage, peut constituer à cette extrémité un limiteur qui coopère avec un boîtier de rotule porté par l'extrémité adjacente de la crémaillère. Ainsi, ces deux fonctions sont directement intégrées au carter de direction, dès la fabrication de celui-ci.

L'invention a aussi pour objet un procédé de fabrication d'un carter de direction de véhicule automobile à structure renforcée, tel que précédemment défini. Ce procédé de fabrication consiste, essentiellement :
- à prévoir un tube de renfort rigide, réalisé dans un matériau composite ;
- à introduire le tube de renfort dans un moule de surmoulage, et à surmouler ce tube avec une matière plastique, de préférence renforcée elle-même par une matière fibreuse, destinée à former le corps du carter de direction.

Le tube de renfort réalisé dans un matériau composite peut être notamment obtenu par pultrusion.

Avant d'être introduit dans le moule de surmoulage, le tube de renfort peut être déformé, à l'une au moins de ses extrémités, par resserrement ou par élargissement. Ce tube de renfort peut encore, avant d'être introduit dans le moule de surmoulage, être percé dans sa paroi latérale, à un endroit où prend place un pignon qui engrène avec la crémaillère.

Le procédé de fabrication du carter comprend avantageusement, dans la phase de surmoulage, l'engagement de noyaux mobiles aux deux extrémités du tube de renfort, avant injection de la matière plastique de surmoulage.

Dans le cas d'une extrémité du tube de renfort comportant un élargissement, cette extrémité ou le carter peut comporter des zones de clippage ou de soudage pour la fixation d'une bague de positionnement et de guidage de la crémaillère.

Enfin, le moule de surmoulage peut comporter, dans ses parties fixe et mobile, des noyaux de maintien qui réalisent le positionnement et le centrage du tube de renfort, avant l'injection de la matière plastique de surmoulage, et le maintien du tube de renfort, pendant le surmoulage.

L'invention sera mieux comprise à l'aide de la description qui suit, en référence au dessin schématique annexé représentant, à titre d'exemple, une forme de réalisation de ce carter de direction, et illustrant son procédé de fabrication.
Figure 1 est une vue extérieure d'un carter de direction conforme à la présente invention ;
Figure 2 est une autre vue extérieure de ce carter de direction ;
Figure 3 est une vue en coupe longitudinale du tube de renfort seul, dans son état initial ;
Figure 4 est une vue en coupe longitudinale du tube de renfort, après formage de ses extrémités ;
Figure 5 illustre l'opération de surmoulage du tube de renfort, dans une représentation en coupe longitudinale ;
Figure 6 est une vue en coupe transversale, suivant VI-VI de figure 5, montrant en particulier les noyaux de maintien ;
Figure 7 est une vue en coupe longitudinale du carter de direction dans son état achevé, avec la crémaillère mise en place dans ce carter.

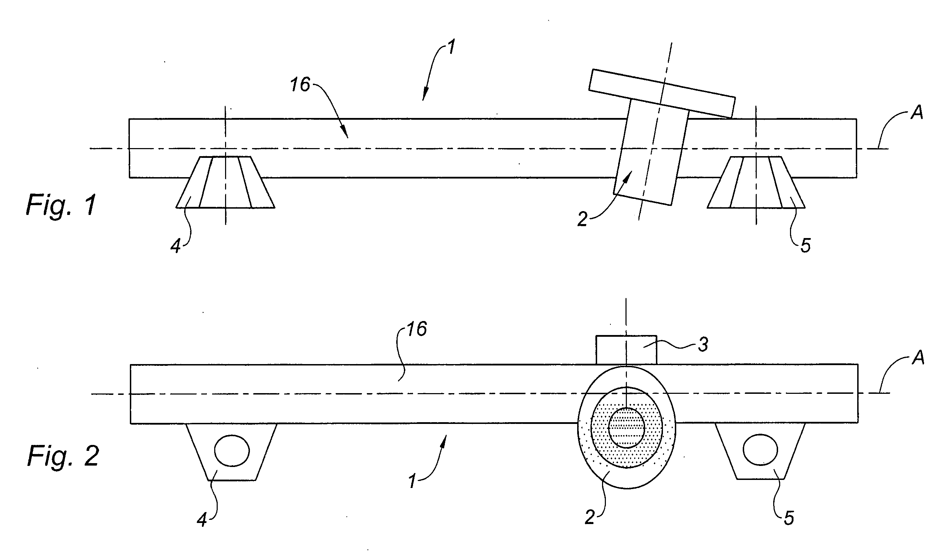

Comme le montrent les figures 1 et 2, un carter de direction 1 présente une forme générale allongée, son axe longitudinal étant indiqué en A. Le carter de direction 1 possède une conformation creuse, lui permettant de recevoir une crémaillère, ce carter de direction 1 présentant aussi une excroissance 2 recevant un pignon de direction, et une autre excroissance 3 formant un logement pour un poussoir, lequel presse le pignon contre la crémaillère. Le carter de direction comporte encore, extérieurement, des éléments de fixation 4 et 5 pour sa liaison avec une caisse d'un véhicule automobile.

Ce carter de direction 1 possède une constitution hybride, avec un corps à base de matière plastique renforcé par un tube de renfort 6.

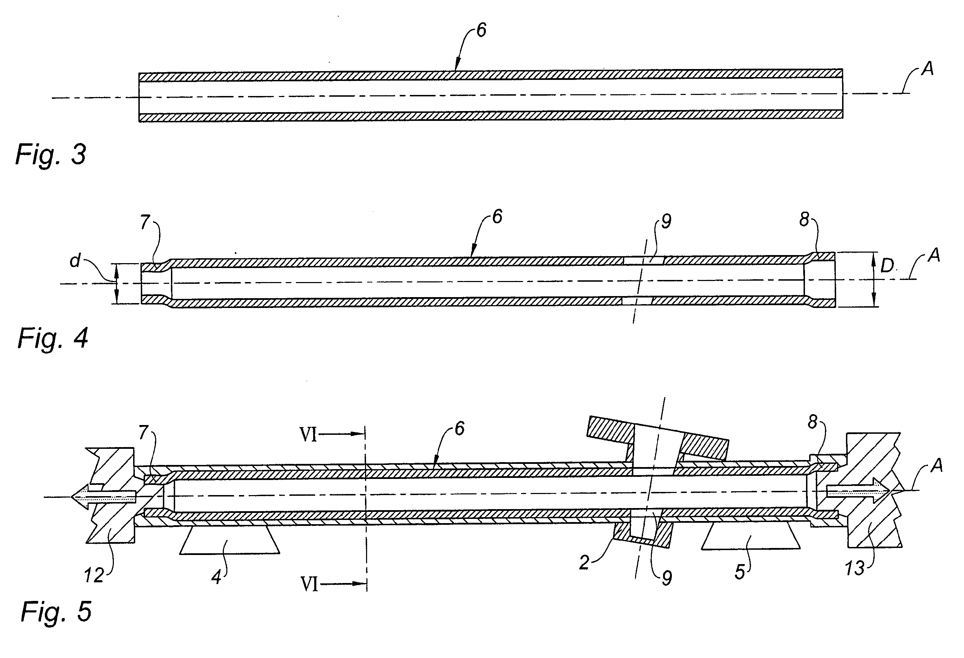

La figure 3 montre le tube de renfort 6, dans son état initial, ce tube étant réalisé en matériau composite. La longueur du tube de renfort 6 correspond sensiblement à la longueur du carter 1.

Comme le montre la figure 4, le tube de renfort 6 subit d'abord, à ses deux extrémités, une opération de formage. Une première extrémité 7 du tube de renfort 6 est resserrée, et elle présente ainsi un diamètre d réduit. L'autre extrémité 8 du tube de renfort 6 est élargie, et elle présente ainsi un diamètre D augmenté. La paroi latérale du tube de renfort 6 est percée d'une ouverture 9, à l'endroit où prendra place le pignon.

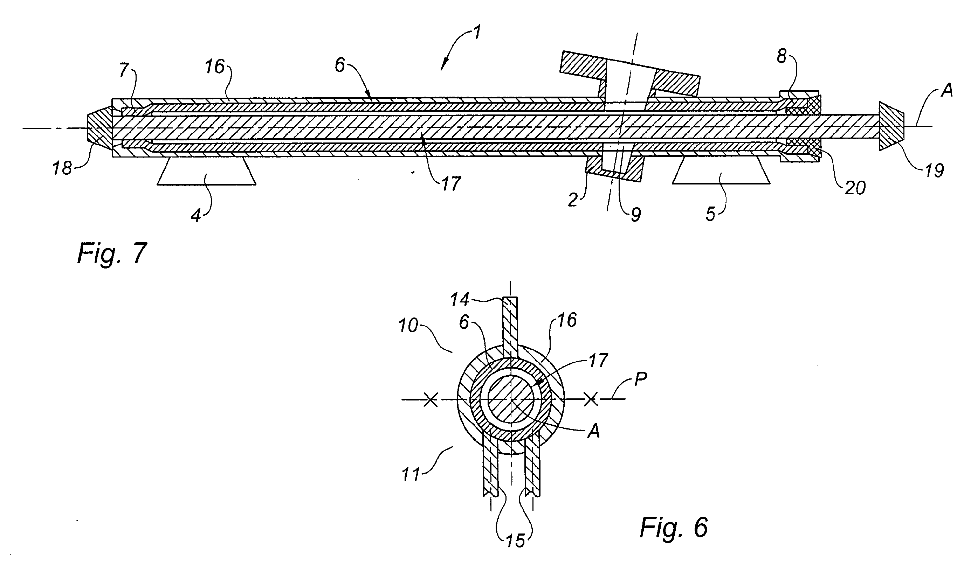

Ainsi préparé, le tube de renfort 6 est introduit dans un moule de surmoulage, montré sur les figures 5 et 6, le moule comprenant une partie fixe 10 et une partie mobile 11, réunies suivant un plan de joint P horizontal. Le moule de surmoulage comprend aussi deux noyaux mobiles 12 et 13, qui sont engagés aux deux extrémités 7 et 8 du tube de renfort 6. Enfin, le moule de surmoulage comporte, sur sa partie fixe 10, au moins un noyau de maintien 14 et, sur sa partie mobile 11, au moins un autre noyau de maintien 15 ; lors de la fermeture du moule, les noyaux de maintien 14 et 15 réalisent le positionnement et le centrage du tube de renfort 6.

Dans la position de fermeture du moule, la matière plastique constitutive du corps 16 du carter de direction 1 est injectée dans ce moule, de telle sorte que le tube de renfort 6 se trouve surmoulé par cette matière plastique. Les éléments de fixation 4 et 5 peuvent être mis en place à la manière d'inserts, dans le moule, et se trouver eux aussi surmoulés à ce stade.

Après ouverture du moule, on obtient le carter de direction 1 fini, dans lequel comme le montre la figure 7 sera montée une crémaillère 17. Les deux extrémités de la crémaillère 17, situées à l'extérieur du carter de direction 1, recevront respectivement deux boîtiers de rotule 18 et 19.

Le montage de la crémaillère 17 étant réalisé, la première extrémité 7 resserrée du tube de renfort 6 assure, à une extrémité du carter de direction 1, le centrage et le guidage de la crémaillère 17. La seconde extrémité 8 élargie du tube de renfort 6 reçoit une bague 20 qui assure, à l'autre extrémité du carter de direction 1, le centrage et le guidage de la crémaillère 17. Cette extrémité 8 élargie du tube de renfort 6 et/ou en conséquence du carter lui-même peut comporter des moyens d'accrochage, notamment par clippage pour la bague 20 qui positionne et guide la crémaillère 17. De tels moyens d'accrochage sont réalisables comme des formes intérieures en creux.

Comme le montre encore la figure 7, à l'extrémité gauche du carter de direction 1, une partie annulaire dépassante du corps 16 sert de butée de fin de course pour le boîtier de rotule 18. A l'extrémité droite du carter de direction 1, la fonction de butée de fin de course est réalisée par la face externe de la bague 20, coopérant avec l'autre boîtier de rotule 19.

Le tube de renfort 6 n'est pas obligatoirement de section ronde, mais il peut aussi présenter une section ovale ou polygonale. La bague 20 pourrait être soudée, ou bien être fixée par un assemblage mécanique, ceci notamment en prévoyant à l'intérieur du carter des godrons fusibles lors de l'opération de soudure.

## Revendications

1. Carter de direction de véhicule automobile à structure renforcée, prévu pour loger et guider une crémaillère, et possédant une forme allongée et creuse, le carter de direction (1) comportant un corps (16) à base de matière plastique, renforcé intérieurement par un tube de renfort (6) rigide, s'étendant sur sensiblement toute la longueur du corps (16) en matière plastique, **caractérisé en ce que** le tube de renfort (6) est réalisé dans un matériau composite.

2. Carter de direction selon la revendication 1, **caractérisé en ce que** le matériau composite du tube de renfort (6) consiste en une matrice en matière thermoplastique, telle que du polyamide ou du polypropylène, ou encore une matière thermodurcissable, compatible avec la matière plastique constitutive du corps (16) du carter de direction (1), ladite matrice étant renforcée par une matière fibreuse incorporée, par exemple de la fibre de verre ou de la fibre de carbone ou de la fibre d'aramide, ou un mélange de ces fibres.

3. Carter de direction selon la revendication 2, **caractérisé en ce que** les fibres de renfort de la matrice sont soit continues et unidirectionnelles, soit bidirectionnelles ou multidirectionnelles et tissées entre elles, soit encore discontinues et dispersées avec une orientation aléatoire dans ladite matrice.

4. Carter de direction selon la revendication 2 ou 3, **caractérisé en ce que** le tube de renfort (6) en matériau composite comporte une matrice en polyamide 66, renforcée avec un tissu de fibre de verre.

5. Carter de direction selon l'une des revendications 1 à 4, **caractérisé en ce que** la surface extérieure du tube de renfort (6) est une surface texturée.

6. Carter de direction selon l'une des revendications 1 à 5, **caractérisé en ce que** le corps (16) du carter (1), à base de matière plastique, est constitué d'une matière plastique dans laquelle sont incorporées des fibres de renfort, par exemple une matrice en polyamide 66 renforcée par de la fibre de verre de longueur compatible avec le procédé d'injection de cette matière plastique.

7. Carter de direction selon l'une des revendications 1 à 6, **caractérisé en ce que** le tube de renfort (6) comporte, à l'une au moins de ses extrémités (7), une conformation resserrée notamment avec réduction de son diamètre (d), pour un positionnement et un guidage direct de la crémaillère (17).

8. Carter de direction selon l'une des revendications 1 à 7, **caractérisé en ce que** le tube de renfort (6) comporte, à l'une au moins de ses extrémités (8), une conformation élargie notamment avec augmentation de son diamètre (D), pour la mise en place d'une bague (20) de positionnement et de guidage de la crémaillère (17).

9. Carter de direction selon la revendication 8, **caractérisé en ce que** l'extrémité (8) à conformation élargie du tube de renfort (6) ou du carter lui-même comporte des moyens d'accrochage, notamment par clippage, pour la bague (20) de positionnement et de guidage de la crémaillère (17).

10. Procédé de fabrication d'un carter de direction de véhicule à structure renforcée, selon l'une des revendications 1 à 9, **caractérisé en ce qu'**il consiste :
- à prévoir un tube de renfort (6) rigide, réalisé dans un matériau composite ;
- à introduire le tube de renfort (6) dans un moule de surmoulage (10 à 15), et à surmouler ce tube avec une matière plastique, de préférence renforcée elle-même par une matière fibreuse, destinée à former le corps (16) du carter de direction (1).

11. Procédé selon la revendication 10, **caractérisé en ce que** le tube de renfort (6), réalisé dans un matériau composite, est obtenu par pultrusion.

12. Procédé selon la revendication 10 ou 11, **caractérisé en ce qu'**avant d'être introduit dans le moule de surmoulage (10 à 15), le tube de renfort (6) est déformé, à l'une au moins de ses extrémités (7, 8), par resserrement ou par élargissement.

13. Procédé selon la revendication 12, **caractérisé en ce que** les conformations des extrémités (7, 8) du tube de renfort (6) en matériau composite sont obtenues par formage à chaud.

14. Procédé selon l'une des revendications 10 à 13, **caractérisé en ce qu'**avant d'être introduit dans le moule de surmoulage (10 à 15), le tube de renfort (6) est percé (9) dans sa paroi latérale, à un endroit où prend place un pignon qui engrène avec la crémaillère (17).

15. Procédé selon l'une des revendications 10 à 14, **caractérisé en ce qu'**il comprend, dans la phase de surmoulage, l'engagement de noyaux mobiles (12, 13) aux deux extrémités (7, 8) du tube de renfort (6), avant injection de la matière plastique de surmoulage.

16. Procédé selon l'ensemble des revendications 12 et 15, **caractérisé en ce que**, dans le cas d'une extrémité (8) du tube de renfort (6) comportant un élargissement, cette extrémité (8) ou le carter comporte des zones de clippage ou de soudage pour la fixation d'une bague (20) de positionnement et de guidage de la crémaillère.

17. Procédé selon l'une des revendications 10 à 16, **caractérisé en ce que** le moule de surmoulage comporte, dans ses parties fixes (10) et mobile (11), des noyaux de maintien (14, 15) qui réalisent le positionnement et le centrage du tube de renfort (6), avant l'injection de la matière plastique de surmoulage, et le maintien du tube de renfort (6), pendant le surmoulage.

## Patentansprüche

1. Lenkgehäuse eines Kraftfahrzeugs mit verstärkter Struktur, das vorgesehen ist, um eine Zahnstange aufzunehmen und zu führen, das eine längliche und hohle Form besitzt, wobei das Lenkgehäuse (1) einen Körper (16) auf der Basis von Kunststoff besitzt, der innen durch ein starres Verstärkungsrohr (6) verstärkt ist, das sich über etwa die gesamte Länge des Körpers (16) aus Kunststoff erstreckt, **dadurch gekennzeichnet, dass** das Verstärkungsrohr (6) aus einem Verbundmaterial hergestellt ist.

2. Lenkgehäuse nach Anspruch 1, **dadurch gekennzeichnet, dass** das Verbundmaterial des Verstärkungsrohrs (6) aus einer Matrix aus thermoplastischem Material besteht wie Polyamid oder Polypropylen oder auch aus einem duroplastischem Material, das mit dem Kunststoff kompatibel ist, der den Körper (16) des Lenkgehäuses (1) bildet, wobei die Matrix durch ein inkorporiertes Fasermaterial, beispielsweise Glasfaser oder Karbonfaser oder Aramidfaser oder ein Gemisch dieser Fasern, verstärkt ist.

3. Lenkgehäuse nach Anspruch 2, **dadurch gekennzeichnet, dass** die Verstärkungsfasern der Matrix entweder kontinuierlich und eindirektional oder zweidirektional oder multidirektional und miteinander verwoben oder auch diskontinuierlich und verstreut mit einer zufälligen Ausrichtung in der Matrix sind.

4. Lenkgehäuse nach Anspruch 2 oder 3, **dadurch gekennzeichnet, dass** das Verstärkungsrohr (6) aus Verbundmaterial eine Matrix aus Polyamid 66 aufweist, die mit einem Glasfasergewebe verstärkt ist.

5. Lenkgehäuse nach einem der Ansprüche 1 bis 4, **dadurch gekennzeichnet, dass** die Außenfläche des Verstärkungsrohrs (6) eine texturierte Fläche ist.

6. Lenkgehäuse nach einem der Ansprüche 1 bis 5, **dadurch gekennzeichnet, dass** der Körper (16) des Gehäuses (1) auf Kunststoffbasis aus einem Kunststoff besteht, in dem Verstärkungsfasern, beispielsweise eine Matrix aus Polyamid 66, verstärkt durch Glasfaser mit einer Länge, die mit dem Spritzverfahren dieses Kunststoffs kompatibel ist, eingearbeitet sind.

7. Lenkgehäuse nach einem der Ansprüche 1 bis 6, **dadurch gekennzeichnet, dass** das Verstärkungsrohr (6) an mindestens einem seiner Enden (7) eine verengte Form insbesondere mit Reduzierung seines Durchmessers (d) für eine Positionierung und eine direkte Führung der Zahnstange (17) aufweist.

8. Lenkgehäuse nach einem der Ansprüche 1 bis 7, **dadurch gekennzeichnet, dass** das Verstärkungsrohr (6) an mindestens einem seiner Enden (8) eine erweiterte Form insbesondere mit Erweiterung seines Durchmessers (D) für die Platzierung eines Positionierungs- und Führungsrings (20) der Zahnstange (17) aufweist.

9. Lenkgehäuse nach Anspruch 8, **dadurch gekennzeichnet, dass** das Ende (8) mit erweiterter Form des Verstärkungsrohrs (6) oder des Gehäuses selbst Befestigungsmittel, vor allem durch Clippen, für den Positionierungs- und Führungsring (20) der Zahnstange (17) aufweist.

10. Verfahren zur Herstellung eines Fahrzeuglenkgehäuses mit verstärkter Struktur nach einem der Ansprüche 1 bis 9, **dadurch gekennzeichnet, dass** es darin besteht:
- ein starres Verstärkungsrohrs (6) bereitzustellen, das aus einem Verbundmaterial hergestellt ist,
- das Verstärkungsrohr (6) in eine Umspritzform (10 bis 15) einzuführen und dieses Rohr mit einem Kunststoff zu umspritzen, der vorzugsweise selbst durch ein Fasermaterial verstärkt ist, der dazu bestimmt ist, den Körper (16) des Lenkgehäuses (1) zu bilden.

11. Verfahren nach Anspruch 10, **dadurch gekennzeichnet, dass** das Verstärkungsrohr (6), das aus einem Verbundmaterial hergestellt ist, durch Pultrusion hergestellt ist.

12. Verfahren nach Anspruch 10 oder 11, **dadurch gekennzeichnet, dass** das Verstärkungsrohr (6), bevor es in die Umspritzform (10 bis 15) eingeführt wird, an mindestens einem seiner Enden (7, 8) durch Verengung oder Erweiterung verformt wird.

13. Verfahren nach Anspruch 12, **dadurch gekennzeichnet, dass** die Ausbildungen der Enden (7, 8) des Verstärkungsrohrs (6) aus Verbundmaterial durch Warmformen hergestellt sind.

14. Verfahren nach einem der Ansprüche 10 bis 13, **dadurch gekennzeichnet, dass** das Verstärkungsrohr (6), bevor es in die Umspritzform (10 bis 15) eingeführt wird, an seiner Seitenwand an einer Stelle durchbohrt (9) wird, wo ein Zahnrad platziert wird, das in die Zahnstange (17) eingreift.

15. Verfahren nach einem der Ansprüche 10 bis 14, **dadurch gekennzeichnet, dass** es in der Umspritzphase das Eingreifen von mobilen Kernen (12, 13) an den zwei Enden (7, 8) des Verstärkungsrohrs (6) umfasst, bevor Umspritzkunststoff gespritzt wird.

16. Verfahren nach allen Ansprüchen 12 und 15, **dadurch gekennzeichnet, dass** im Fall eines Endes (8) des Verstärkungsrohrs (6), das eine Erweiterung aufweist, dieses Ende (8) oder das Gehäuse Clip- oder Schweißzonen für die Befestigung eines Positionierungs- und Führungsrings (20) der Zahnstange aufweist.

17. Verfahren nach einem der Ansprüche 10 bis 16, **dadurch gekennzeichnet, dass** die Umspritzform in ihrem festen (10) und beweglichen (11) Abschnitt Haltekerne (14, 15) aufweist, die die Positionierung und die Zentrierung des Verstärkungsrohrs (6) vor dem Spritzen des Umspritzkunststoffs und das Halten des Verstärkungsrohrs (6) während der Umspritzung durchführen.

## Claims

1. A motor vehicle steering box with a reinforced structure, provided to house and guide a rack, and having an elongated and hollow shape, the steering box (1) including a body (16) with a base of a plastic material, inwardly reinforced by a rigid reinforcing tube (6), extending over substantially the entire length of the plastic body (16), **characterized in that** the reinforcing tube (6) is made from composite material.

2. The steering box according to claim 1, **characterized in that** the composite material of the reinforcing tube (6) consists of a plastic matrix, such as polyamide or polypropylene, or a thermosetting matrix, compatible with the plastic material making up the body (16) of the steering box (1), said matrix being reinforced by an incorporated fibrous material, for example glass fiber or carbon fiber or aramid fiber, or a mixture of those fibers.

3. The steering box according to claim 2, **characterized in that** the reinforcing fibers of the matrix are continuous and unidirectional, or bidirectional or multidirectional and woven together, or discontinuous and dispersed with a random orientation in the matrix.

4. The steering box according to claim 2 or 3, **characterized in that** the reinforcing tube (6) made from a composite material includes a polyamide matrix 66, reinforced with a glass fiber fabric.

5. The steering box according to one of claims 1 to 4, **characterized in that** the outer surface of the reinforcing tube (6) is a textured surface.

6. The steering box according to one of claims 1 to 5, **characterized in that** the body (16) of the box (1), with a base of a plastic material, is made up of a plastic material in which reinforcing fibers are incorporated, for example a polyamide matrix 66 reinforced by glass fiber with a length compatible with the injection method for that plastic material.

7. The steering box according to one of claims 1 to 6, **characterized in that** the reinforcing tube (6) includes, at least at one of its ends (7), a tightened configuration in particular reducing its diameter (d), for positioning and direct guiding of the rack (17).

8. The steering box according to one of claims 1 to 7, **characterized in that** the reinforcing tube (6) includes, at least at one of its ends (8), a wider configuration in particular increasing its diameter (D), to place a positioning and guiding ring (20) for the rack (17).

9. The steering box according to claim 8, **characterized in that** the end (8) with a wider configuration of the reinforcing tube (6) or the box itself includes catching means, in particular by clipping, for the ring (20) for positioning and guiding the rack (17).

10. A method for manufacturing a vehicle steering box with a reinforced structure, according to one of claims 1 to 9, **characterized in that** it consists of:
- providing a rigid reinforcing tube (6), made from a composite material;
- inserting the reinforcing tube (6) into an overmolding mold (10 to 15), and overmolding that tube with a plastic material, preferably in turn reinforced by a fibrous material, designed to form the body (16) of the steering box (1).

11. The method according to claim 10, **characterized in that** the reinforcing tube (6), made from composite material, is obtained by pultrusion.

12. The method according to claim 10 or 11, **characterized in that** before being inserted into the overmolding mold (10 to 15), the reinforcing tube (6) is deformed, at least at one of its ends (7, 8), by tightening or widening.

13. The method according to claim 12, **characterized in that** the configurations of the ends (7, 8) of the reinforcing tube (6) made from composite material are obtained by hot forming.

14. The method according to one of claims 10 to 13, **characterized in that** before being inserted into the overmolding mold (10 to 15), the reinforcing tube (6) is pierced (9) in the side wall thereof, at a location where a pinion is positioned that meshes with the rack (17).

15. The method according to one of claims 10 to 14, **characterized in that**, in the overmolding phase, it comprises engaging movable cores (12, 13) at both ends (7, 8) of the reinforcing tube (6), before injecting the plastic overmolding material.

16. The method according to both of claims 12 and 15, **characterized in that**, in the case of an end (8) of the reinforcing tube (6) including a widening, that end (8) or the box includes clipping or welding areas for fastening the ring (20) for positioning and guiding the rack.

17. The method according to one of claims 10 to 16, **characterized in that** the overmolding mold includes, in the stationary (10) and moving (11) parts thereof, maintaining cores (14, 15) that position and center the reinforcing tube (6), before the injection of overmolding plastic, and maintain the reinforcing tube (6) during overmolding.
